# EUROPEAN PATENT SPECIFICATION

(11) **EP 2 851 153 B1**
(45) Date of publication and mention of the grant of the patent: **23.08.2017**
(21) Application number: 13791174.9
(22) Date of filing: 14.05.2013
(51) Int. Cl.: B23K 101/18, B23K 20/12, B23Q 5/10

(54) **ELECTRIC SPINDLE WITH AXIAL FORCE CONTROL, INTENDED FOR FRICTION WELDING AND OTHER USES**
ELEKTRISCHE SPINDEL MIT AXIALKRAFTSTEUERUNG FÜR REIBSCHWEISSUNG UND ANDERE VERWENDUNGEN
ÉLECTROMANDRIN À COMMANDE DE FORCE AXIALE POUR UN SOUDAGE PAR FRICTION ET D'AUTRES APPLICATIONS

(30) Priority: 16.05.2012 ES 201230741
(43) Date of publication of application: 25.03.2015
(73) Proprietor: Loxin 2002, S.l., Navarra (ES)
(72) Inventor: Aguirre Artieda, José María, E-31191 Esquiroz (Navarra) (ES); Baigorri Hermoso, Julián, E-31191 Esquiroz (Navarra) (ES)
(74) Representative: Schäfer, Matthias W.
(86) International application number: PCT/ES2013/070304
(87) International publication number: WO 2013/171355

(56) References cited:
- EP-A1- 1 992 436
- EP-A2- 1 201 347
- EP-A2- 2 168 708
- WO-A1-00/02704
- DE-A1- 4 025 610
- DE-A1- 10 229 134
- JP-A- 2007 216 328
- US-A1- 2002 027 153
- US-A1- 2011 079 339
- US-B1- 6 497 355

## Description

This description relates, as its title indicates, to an electric spindle with axial force control intended for friction welding and other uses, of the type used industrially for the automated welding of metal plates and for milling machining, characterized in that it incorporates, inside the electric spindle body, a force sensor associated with the tool by means of an internal shaft that can move axially and which, via an electromechanical actuator, allows the real-time local adjustment of the height of the tool above the material to be welded, such as to maintain a constant, controlled force during the process.

### Field of the invention

Friction or Stir Welding, known by its initials (FSW), is a process of joining two parts that is carried out in the solid state, in which a cylindrical tool with a pin at its end is inserted into the joint between two parts that are to be welded. Once the tool, with the necessary force on the product to be welded, has acquired the adequate speed and has heated the material due to friction, the material begins to soften, acquiring a plastic state and said tool penetrates the joint. At that moment the tool begins to move along the joint, moving the material that was on the front face of the pin to the rear face via the rotational movement of said tool; when the material cools it returns to a solid state, joining both parts by welding.

### The Prior Art

The use of friction technology has clear advantages over the usual welding processes as can be seen hereafter.
No emission of gases and fumes. The usual TIG and MIG processes employed emit toxic fumes which, at best, are emitted to the atmosphere and in the worst-case scenario are inhaled by the operators.
Improved energy balance. The energy balance of this process compared with arc processes (TIG and MIG) is approximately 500% less.

Increase in productivity of approximately 500% compared to traditional welding processes.
The applications of FSW that are currently available are butt welding or overlap welding, without the need to machine the joint profile.
FSW type welds can be performed in one single pass in industrial machines, eliminating the need to perform multi-pass welds in arc welding, with the savings that this represents in terms of inspection and rectification between passes.

FSW welding does not require any protective gas, thereby saving on the acquisition and storage of gases, and all that this implies for environmental safety.
As corresponds to a solid-state process, FSW welds do not present the problems of porosity and cracking associated with fusion welding techniques, nor are they affected to such an extent by variations between supply material castings.
As a result of being a solid-state weld, FSW is cleaner in terms of the fumes and splatter that are common to fusion-welded joints. Furthermore, FSW-type joints also display less distortion after manufacturing.
In industrial welding processes there is not a dimensional precision in the parts to be welded. It has been established that the change between the theoretical dimension of the weld part and the real dimension is excessive. Slight deviations in dimensions cause great changes in force and consequently temperature changes during the process, resulting in the weld not being properly controlled. Dilations, supports and deformations also cause these changes in height during the welding process.
To correct the surface irregularities that cause this problem, current processes either do not take it into account and the welds performed are of a low quality or external force-measuring systems are developed for the machine to correct the position. This involves the whole machine having to move to carry out corrections and, consequently, speed of correction is reduced.
To achieve a correct precision, different hydraulic systems for position control have been designed and manufactured. These systems have been shown to lack sensitivity and control due to the necessary seals that cause excessive friction in the control process.
The problem arises from the present need to increase welding speed to compete with conventional welding in velocity and to improve the sensitivity of hydraulic systems. This implies very fast correction of force, which is impossible to achieve by a machine movement due to the great mass to be moved and the necessary frequencies to be reached. Dynamics depend directly on stiffness and mass so that the current systems are very heavy (CNC machines) or very weak (articulated robots).

### Background of the invention

In industrial welding processes there is no dimensional precision in the parts to be welded. It has been established that the change between the theoretical dimension of the weld part and the real dimension is excessive. Slight deviations in dimensions cause great changes of force between the tool and the material to be welded and thus generate great temperature changes during the process, which means that the weld obtained is not correct. Dilations, supports and deformations also cause these changes in height during the welding process.

To compensate for the surface irregularities that cause this problem, current processes either do not take it into account and the welds performed are of a low quality, or external force-measuring systems are developed for the machine to correct the position, acting in its entirety, with the consequent constraints caused by accelerating the whole of its mass, resulting in very low working speeds.

To achieve the correct precision, different hydraulic systems for position control have been tried but these systems have been found to lack sensitivity because of the necessary seals that cause excessive friction in the control process.

With this system the aim is to increase the working speed, with the necessary quality to be able to compete with conventional welds. This involves correcting force at high speeds that are impossible to achieve with the movement of the whole machine due to the great masses to be moved or accelerated and the frequencies that are generated for this purpose. Dynamics depend directly on stiffness and responsiveness, so that current systems are found to be very heavy (CNC machines) or very weak (articulated robots).

One of the weaknesses of current friction welding machines is that they are not sensitive to height changes in the weld path due to dimensional tolerances of parts, deformation due to temperature, incorrect supports or deformations due to inherent weld stresses that change the theoretical path.

Some devices simply do not take this problem into account, such as, for example, those described in Patent WO2012019210"*Device for friction welding"* or in Patent US8141764 "*Friction stir welding apparatus, system and method*"*.*

Various efforts have been made, at a theoretical and practical level, applying to machine tools and articulated robots, to try to compensate for the deviations that occur. All of these compensations are based on the positioning of the welding machine or robot. There are several control and compensating systems in this field that involve the entire machine or part of it having to move to correct positions and, thereby, force. An example of this technique is described in Patent US20110079339 *"Control techniques, systems and methods of force control in an electric spindle for friction stir welding".*

Other techniques have been attempted such as that described in Patent US8164021 "*Electrically assisted friction welding*"*,* which carries out measurements by means of a resistive circuit created between the electric spindle and the material to be welded, or Patent CN101929892 "*Online test system for friction welding*" that measures the force by means of temperature measurement and detection of vibrations. US2002/0027153A1 discloses an electric spindle according to the preamble of claim 1. There have also been attempts to insert a force sensor between the electric spindle and the welding tool, on its bottom part, but this requires a longer rotating shaft, which means less stiffness during welding, causing a significant loss of precision and its use is not practical.

It is also noteworthy that the electric spindles currently used for friction welding have a tool that is solely for this purpose, without the possibility of any other uses.

### Description of the invention

To solve the current problems of height adjustment to compensate for irregularities in surfaces, the electric spindle with axial force control intended for friction welding and other uses that is the object of this invention has been devised as defined in claim 1, integrating in the body of the electric spindle, a force sensor associated with the tool by means of an internal shaft, being able to move axially, and which, by means of an electromechanical actuator, allows the adjustment of the height of the tool over the material to be welded, in real time and locally, permitting a constant force to be maintained which results in a flawless weld.

This axially movable internal shaft is located co-axially inside the rotating shaft connected to the rotor of the electric spindle motor.

The force sensor is located on the part of the electric spindle opposite to the tool, so that its rotating shaft does not have to be lengthened, eliminating the problems of lack of stiffness.

Furthermore, the electric spindle has a tool clamping device which allows automatic changeover of tools, permitting its use and compatibility for other functions such as machining as well as friction welding, for example milling.

### Advantages of the invention

The electric spindle with axial force control intended for friction welding and other uses presented here, affords numerous advantages over the systems currently available, the most important being that it allows height correction to be achieved according to force, automatically in the electric spindle itself, and much more precisely and quickly, obtaining a more uniform weld and without irregularities.

Another important advantage is that the control system is integrated in the electric spindle, thus making control of the height of the friction welding machine independent. With this height control and internal sensorization, dynamic control of the force applied during the welding process is achieved.

It is important to highlight the improvement in controlling correction of the position of the tool tip, due to said control being local and one-directional, exactly in the direction of the tool.

It is also important to stress the improvement in the speed with which the position of the tool is corrected, given that because only the shaft of the electric spindle is moved, the moving mass can be lessened and consequently much better dynamics are achieved.

In addition it is noteworthy that by incorporating the sensor inside the electric spindle itself, the force can be controlled exactly in the zone in which it is applied.

Another important advantage consists of being able to combine the height control system with a quick tool changeover system, to maintain the industrial concept of the system.

Also to be noted is the improvement in force compensation and hence in the process, given that the incorporation of a force sensor, integrated in the electric spindle, increases the working speed and control of the process, consequently improving the economic profitability of its application in industry.

### Description of the figures

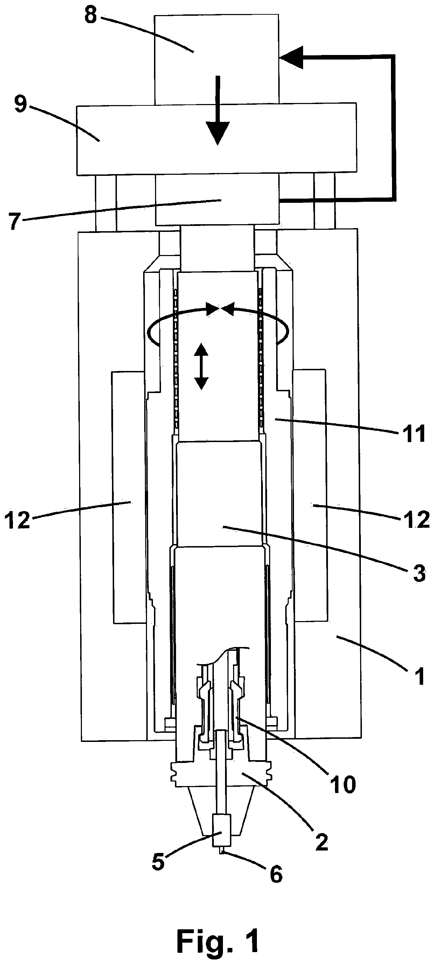

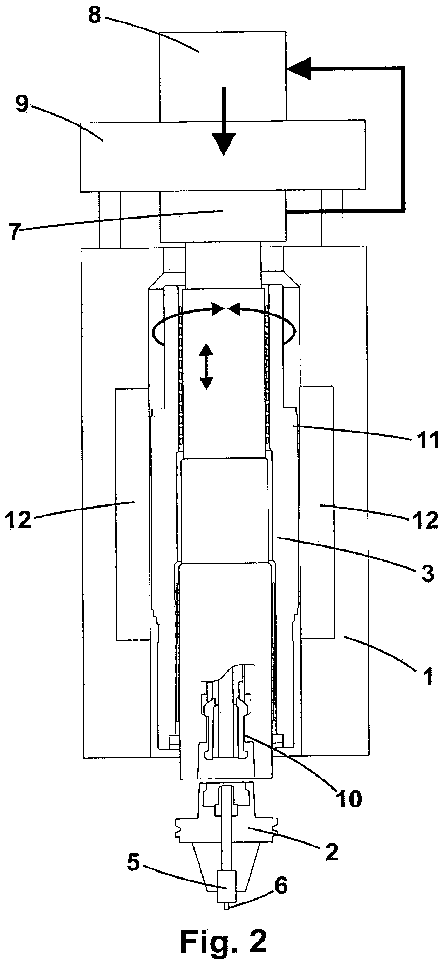

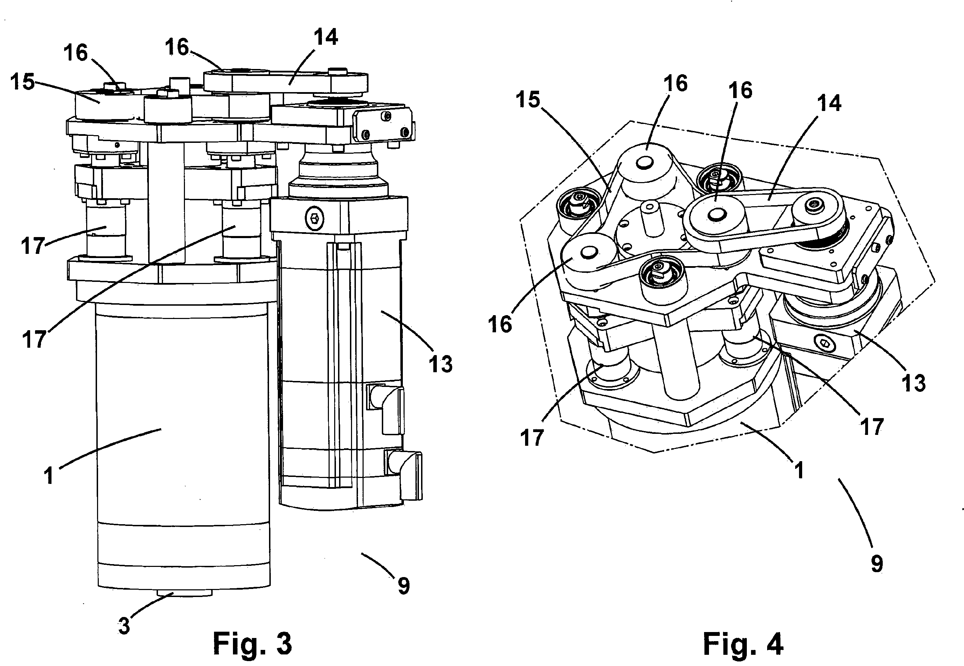

To gain a better understanding of the object of the present invention the attached drawing shows a preferred practical embodiment of an electric spindle with axial force control intended for friction welding and other uses. In said drawing figure -1-shows a simplified schematic view of the electric spindle elements with the tool carrier mounted.
Figure -2- shows a simplified schematic view of the electric spindle elements with the tool carrier dismantled.
Figure-3- shows a side view of an example of an electromechanical actuator (9) formed by a motor and three spindles connected by means of belts.
Figure-4- shows a detail of a top view of an example of an electromechanical actuator (9) formed by a motor and three spindles connected by means of belts.

### Preferred embodiment of the invention

The electric spindle with axial force control intended for friction welding and other uses that is the object of the present invention, basically comprises, as shown in the attached drawing, in the body (1) of the electric spindle, a rotating shaft (3) connected to the rotor (11), which, together with the stator (12), form the electric spindle rotation motor, said rotating shaft (3) having a tool carrier (2), that is interchangeable via an automatic clamping device (10) and said shaft (3) also being axially movable in relation to the rotor (11) which links it to a force sensor (7) located on the part opposite to the tool carrier (2) and attached to an axial electromechanical system (9)

It also comprises a control circuit (8) linked to the force sensor (7) which, in turn, by means of an axial electromechanical system (9), carries out real-time control of the shaft (3) on the material to be welded.

The axial electromechanical system (9) is formed preferably by at least a motor (13) which, by means of a primary belt (14) and a secondary belt (15) transmits the rotation to several pulleys (16) which, in turn, by means of some spindles (17) axially move the shaft (3) of the electric spindle. The number of spindles (17) shall be preferably three, to facilitate smooth and accurate axial movement of the electric spindle.

It is envisaged that, alternatively, the electromechanical system (9) may be formed by at least a motor and one or several spindles, or that it may be carried out by means of an electromechanical actuator (9) of a piezoelectric type.

The axial movement of the rotating shaft (3) in relation to the rotating rotor (11) is achieved by means of a rolling-elements cage or by means of adjustment bushes inserted between the two.

This electric spindle for friction welding entails a procedure for friction welding formed by an initial tool placement phase, followed by a second phase of insertion of the tool in the material, followed by a third phase of automatic control of the force.

The initial placement phase consists of automatically attaching, in the clamping device (10), a tool carrier (2) fitted with a cylindrical tool (5) with a pin (6).

The second phase of insertion consists of the combined high-revolution rotation of the rotor (11), the shaft (3), the shaft (4) and, via the clamping device (8), of the cylindrical tool (5) with pin (6), said pin (6) resting on the joint of the materials to be welded until the melting of the material occurs, with the pin (6) remaining rotating buried inside the material.

The third welding phase consists of the longitudinal advance of the electric spindle along the material joint line, with revolutions continuing, driven by the machine linked to the electric spindle, automatic control of the force in the electric spindle being carried out by means of the axial electromechanical system (9) according to the signals from the control circuit (8) that constantly measures the force applied on the tool (5) by means of the axial movement of the shaft (3) depending on the irregularities in the surface to be welded and its measuring by means of the force sensor(7).

## Claims

1. Electric spindle with axial force control for friction welding and other uses, **characterized in that** it comprises,
in the body (1) of the electric spindle, a rotating shaft (3) connected in rotation with the rotor (11) which, together with the stator (12), form the rotation motor of the electric spindle , the rotating shaft (3) having a tool carrier (2), that is interchangeable by means of an automatic clamping device (10), and the rotating shaft (3) also being provided with axial movement in relation to the rotor (11) which links it to a force sensor (7), said force sensor being connected to an axial electromechanical system (9) which controls the position of the rotating shaft (3) axially by means of the force sensor (7) connected to the shaft (3) as well as to the tool (2), to correct the position and the axial force in the work process, wherein the axial electromechanical system (9) comprises at least a motor and one or several spindles, or at least a linear motor, or at least a motor and one or several racks.

2. Electric spindle according to claim 1, wherein it comprises a control circuit (8) linked to the force sensor (7) which, in turn, adjusts, in real time and by means of an electromechanical system (9), the height of the shaft (3) with the corresponding tool carrier above the material to be welded.

3. Electric spindle according to claim 1, wherein the axial electromechanical system (9) comprises at least a motor (13) that, by means of a primary belt (14) and a secondary belt (15) transmits the rotation to several pulleys (16) which, in turn, by means of spindles (17) axially move the body (1) of the electric spindle.

4. Electric spindle according to claim 1, wherein the axial force sensor (7) connected to the shaft (3) is a piezoelectric device.

5. Electric spindle according to claim 1, wherein the axial force sensor (7) connected to the shaft (3) is a device with load cells.

6. Electric spindle according to claim 1, in which the axial movement of the rotating shaft (3) in relation to the rotating rotor (11) is achieved through rolling elements.

7. Electric spindle according to claim 1, in which the axial movement of the rotating shaft (3) in relation to the rotating rotor (11), is achieved through adjustment bushes.

## Patentansprüche

1. Elektrische Spindel mit axialer Kraftsteuerung zum Reibschweißen und für andere Anwendungen,
**dadurch gekennzeichnet, dass** sie
im Körper (1) der elektrischen Spindel eine sich drehende Welle (3) aufweist, welche mit dem Rotor (11) in Drehung verbunden ist, welcher zusammen mit dem Stator (12) den Drehmotor der elektrischen Spindel bildet, wobei die sich drehende Welle (3) einen Werkzeugträger (2) aufweist, welcher mit Hilfe einer automatischen Spannvorrichtung (10) austauschbar ist, und wobei die sich drehende Welle (3) auch mit axialer Bewegung in Bezug auf den Rotor (11) versehen ist, welcher sie mit einem Kraftsensor (7) verbindet, wobei der Kraftsensor mit einem axialen, elektromechanischen System (9) verbunden ist, welches die Position der sich drehenden Welle (3) axial mit Hilfe des Kraftsensors (7) steuert, welcher mit der Welle (3) sowie mit dem Werkzeug (2) verbunden ist, um die Position und die axiale Kraft im Arbeitsprozess zu korrigieren, wobei das axiale, elektromechanische System (9) zumindest einen Motor und eine oder mehrere Spindeln oder zumindest einen Linearmotor oder zumindest einen Motor und eine oder mehrere Zahnstangen aufweist.

2. Elektrische Spindel nach Anspruch 1, wobei sie einen Steuerschaltkreis (8) aufweist, welcher mit dem Kraftsensor (7) verbunden ist, welcher wiederum in Echtzeit und mit Hilfe eines elektromechanischen Systems (9) die Höhe der Welle (3) mit dem entsprechenden Werkzeugträger über dem zu schweißenden Material einstellt.

3. Elektrische Spindel nach Anspruch 1, wobei das axiale, elektromechanische System (9) zumindest einen Motor (13) aufweist, welcher mit Hilfe eines primären Riemens (14) und eines sekundären Riemens (15) die Drehung auf verschiedene Rollen (16) überträgt, welche wiederum mit Hilfe von Spindeln (17) den Körper (1) der elektrischen Spindel axial bewegen.

4. Elektrische Spindel nach Anspruch 1, wobei der mit der Welle (3) verbundene axiale Kraftsensor (7) eine piezoelektrische Vorrichtung ist.

5. Elektrische Spindel nach Anspruch 1, wobei der mit der Welle (3) verbundene axiale Kraftsensor (7) eine Vorrichtung mit Kraftmessdosen ist.

6. Elektrische Spindel nach Anspruch 1, bei welcher die axiale Bewegung der sich drehenden Welle (3) in Bezug auf den sich drehenden Rotor (11) durch Wälzelemente erzielt wird.

7. Elektrische Spindel nach Anspruch 1, bei welcher die axiale Bewegung der sich drehenden Welle (3) in Bezug auf den sich drehenden Rotor (11) durch Stellhülsen erzielt wird.

## Revendications

1. Électro-mandrin à commande force axiale pour un soudage par friction et d'autres applications
**caractérisé en ce qu'**il renferme
dans le corps (1) de l'électro-mandrin un arbre en rotation (3) relié en rotation avec le rotor (11) qui, avec le stator (12), forme le moteur de rotation de l'électro-mandrin, l'arbre en rotation (3) présentant un porte-outil (2) qui est interchangeable grâce à un dispositif de serrage automatique (10), et l'arbre en rotation (3) se voyant également appliqué un mouvement axial par rapport au rotor (11) qui le connecte à un capteur de force (7), ledit capteur de force (7) étant relié à un système électromécanique axial (9) qui contrôle la position axiale de l'arbre en rotation (3) grâce au capteur de force (7) relié à l'arbre en rotation (3) et à l'outil (2), afin de corriger la position et la force axiale durant le processus de travail, étant précisé que le système électromécanique axial (9) comprend au moins un moteur et un ou plusieurs mandrins, ou au moins un moteur linéaire, ou au moins un moteur et une ou plusieurs crémaillères.

2. Électro-mandrin conformément à la Revendication 1 étant précisé qu'il comprend un circuit de commande (8) relié au capteur de force (7) qui, à son tour, ajuste la hauteur de l'arbre (3) avec le porte-outil correspondant au-dessus du matériau à souder, en temps réel et au moyen d'un système électromécanique (9).

3. Électro-mandrin conformément à la Revendication 1 étant précisé que le système électromécanique axial (9) comprend au moins un moteur (13) qui, au moyen d'une courroie primaire (14) et d'une courroie secondaire (15), transmet la rotation à plusieurs poulies (16) qui, à leur tour, grâce à des mandrins, assurent le déplacement axial du corps (1) de l'électro-mandrin.

4. Électro-mandrin conformément à la Revendication 1 étant précisé que le capteur de force (7) relié à l'arbre (3) est un dispositif piézoélectrique.

5. Électro-mandrin conformément à la Revendication 1 étant précisé que le capteur de force (7) relié à l'arbre (3) est un dispositif présentant des cellules de charge.

6. Électro-mandrin conformément à la Revendication 1 étant précisé que le mouvement axial de l'arbre en rotation (3) en relation avec le rotor en rotation (11) est obtenu au travers d'éléments roulants.

7. Électro-mandrin conformément à la Revendication 1 étant précisé que le mouvement axial de l'arbre en rotation (3) en relation avec le rotor en rotation (11) est obtenu au travers de douilles d'ajustement.
